# EUROPÄISCHE PATENTSCHRIFT

(11) **EP 3 181 423 B1**
(45) Veröffentlichungstag und Bekanntmachung des Hinweises auf die Patenterteilung: **29.07.2020**
(21) Anmeldenummer: 16199172.4
(22) Anmeldetag: 16.11.2016
(51) Int. Cl.: B60W 30/165, G05D 1/02, G08G 1/16

(54) **VERFAHREN UND SYSTEM ZUR AUTOMATISCHEN STEUERUNG EINES FOLGEFAHRZEUGS MIT EINEM SCOUT-FAHRZEUG**
METHOD AND SYSTEM FOR AUTOMATICALLY GUIDING A FOLLOW VEHICLE WITH A SCOUT VEHICLE
PROCÉDÉ ET SYSTÈME DE COMMANDE AUTOMATIQUE D'UN VÉHICULE SUIVEUR COMPRENANT UN VÉHICULE SCOUT

(30) Priorität: 15.12.2015 DE 102015225238
(43) Veröffentlichungstag der Anmeldung: 21.06.2017
(73) Patentinhaber: VOLKSWAGEN AKTIENGESELLSCHAFT, 38440 Wolfsburg (DE)
(72) Erfinder: Darms, Michael, 38165 Lehre (DE); Meinecke, Marc-Michael, 38524 Sassenburg (DE); Bartels, Arne, 38448 Wolfsburg (DE); Junge, Lutz, 38106 Braunschweig (DE)

(56) Entgegenhaltungen:
- DE-A1- 19 949 448
- DE-A1-102012 208 256
- DE-A1-102012 212 681
- DE-A1-102014 202 509

## Beschreibung

Die vorliegende Erfindung betrifft ein Verfahren zur automatischen Steuerung zumindest eines Folgefahrzeugs. Sie betrifft ferner ein System zur automatischen Steuerung zumindest eines Folgefahrzeugs mit einem Scout-Fahrzeug.

Zur Steigerung der Effizienz und Sicherheit im Verkehr und in der Logistik, insbesondere beim Transport von Gütern, aber auch im Personentransportwesen, wird eine weitreichende Automatisierung von Fahrzeugen angestrebt. Dazu sind bereits Techniken bekannt, die durch automatische Eingriffe auf verschiedenen Ebenen in die Steuerung eines Fahrzeugs den Fahrer entlasten oder einzelne Fahrmanöver vollautomatisch durchführen. Dies reicht bis hin zu einer Fernsteuerung oder dem autonomen Abfahren einer Route durch ein Fahrzeug.

Die DE 10 2005 059 517 A1 beschreibt ein solches System zum Führen und Operieren eines Fahrzeugs ohne Fahrer, wobei Daten von Sensoren des Fahrzeugs zu einer Einsatzzentrale weitergeleitet werden und von der Einsatzzentrale Einsatzdaten zur Steuerung des Fahrzeugs auf dieses übertragen werden. Dabei wird eine Datenübertragung zwischen Fahrzeug und Einsatzzentrale in annähernder Echtzeit vorausgesetzt beziehungsweise eine eventuell auftretende Zeitverzögerung wird technisch kompensiert.

Bei dem in der DE 10 2013 212 255 A1 beschriebenen Verfahren überprüft ein erstes Fahrzeug mit einer Sensorik einen Raum relativ zum ersten Fahrzeug und überträgt das Ergebnis der Überprüfung an ein zweites Fahrzeug. Dadurch kann diesem beispielsweise mitgeteilt werden, ob ein Raum in der Umgebung des ersten Fahrzeugs frei ist und ob ein Einscheren durchgeführt werden kann.

Bei dem in der DE 10 2013 225 011 A1 beschriebenen Verfahren wird in einem hochautomatisiert fahrenden Kraftfahrzeug die eigene Position mit externen Daten über eine aktuelle Verkehrssituation abgeglichen und entschieden, ob eine Änderung des Fahrzustands erforderlich ist. Insbesondere wird erkannt, ob das Fahrzeug auf ein Hindernis oder einen anderweitig nicht automatisch befahrbaren Streckenabschnitt zufährt. Dies kann etwa zum Abbruch der automatisierten Fahrt führen. Beispielsweise kann eine Sperrung eines vor dem Fahrzeug liegenden Streckenabschnitts für die automatisierte Fahrt verarbeitet werden oder es kann eine Staumeldung zum rechtzeitigen Abbruch der hochautomatisierten Fahrt dienen.

Die DE 10 2012 212 681 A1 beschreibt ein Verfahren zum autonomen Geleiten von Fahrzeugen, die entlang einer Route fahren, wobei ein Leitfahrzeug mit mindestens einem Folgefahrzeug in Kommunikation steht. Das mindestens eine Folgefahrzeug empfängt eine Kommunikation in Bezug auf eine Zielversatzposition und Routendaten. Nachführungsdaten werden erzeugt und von Borderfassungsvorrichtungen des mindestens einen Folgefahrzeugs abgeleitet, die einen zurückgelegten Weg des Leitfahrzeugs umfassen, der durch das mindestens eine Folgefahrzeug erfasst wird. Die Routendaten werden mit den Nachführungsdaten zum Identifizieren einer Genauigkeit zwischen den Routendaten relativ zu den Nachführungsdaten verglichen. Eine eingestellte Zielversatzposition und ein Satz von Trajektorientpunkten, der einen Trajektorienfahrweg von einer aktuellen Position des mindestens einen Folgefahrzeugs zur eingestellten Zielversatzposition vorsieht, werden auf der Basis der Genauigkeit zwischen den Routendaten und den Nachführungsdaten bestimmt.

Eine zentrale Voraussetzung für den sicheren Betrieb derartiger Systeme ist eine hohe Redundanz bei den verwendeten Sicherungsvorkehrungen. Typischerweise setzt die automatische Durchführung eines Fahrmanövers die Anwesenheit eines Fahrers voraus, der die Bewegung des Fahrzeugs überwacht und korrigierend eingreifen kann. Dies beugt insbesondere Fehlfunktionen des Systems vor, etwa bei defekten Sensoren oder in ungewöhnlichen Verkehrssituationen. Es ist in diesem Fall also kein vollständig automatisches Fahren implementiert, sondern ein assistiertes Fahren. Der Automatisierungsgrad ist dabei an die technische Ausführung des Systems, insbesondere an die vorgesehenen Redundanzen, angepasst.

Soll das System vollständig automatisch betrieben werden, also ohne dass für jedes Fahrzeug ein Fahrer vorgesehen ist, so müssen hochgradige Redundanzen auf technischer Ebene vorgesehen sein. Dies wird etwa durch den Einbau einer Vielzahl von - teils mehrfach ausgelegten - Sensoren im Fahrzeug erreicht. Dabei sind allerdings die Möglichkeiten der Integration von Sensoren in einem Fahrzeug räumlich beschränkt, ferner können beträchtliche Zusatzkosten entstehen.

Der vorliegenden Erfindung liegt die Aufgabe zugrunde, ein Verfahren und ein System der eingangs genannten Art bereitzustellen, bei denen eine zu einem hohen Grad automatisierte Steuerung erreicht wird.

Erfindungsgemäß wird diese Aufgabe durch ein Verfahren mit den Merkmalen des Anspruchs 1 und ein System mit den Merkmalen des Anspruchs 12 gelöst. Vorteilhafte Ausgestaltungen und Weiterbildungen ergeben sich aus den abhängigen Ansprüchen.

Bei dem erfindungsgemäßen Verfahren wird für ein Scout-Fahrzeug eine Scout-Trajektorie erzeugt. Das Scout-Fahrzeug wird entlang einer Ist-Trajektorie geführt, wobei mittels Scout-Sensoren die Ist-Trajektorie des Scout-Fahrzeugs und Scout-Umgebungsdaten erfasst werden.

Für das Folgefahrzeug wird eine Soll-Trajektorie erzeugt und mittels Folgefahrzeug-Sensoren werden Folgefahrzeug-Umgebungsdaten erfasst. Anhand der erzeugten Scout-Trajektorie und der erfassten Ist-Trajektorie wird eine Scout-Trajektorienähnlichkeit bestimmt, wobei die erzeugte Scout-Trajektorie ausreichend ähnlich zu der Ist-Trajektorie sein muss, um als automatisch befahrbar bewertet zu werden, es werden Referenz-Trajektoriendaten erzeugt und anhand der Scout-Umgebungsdaten werden Referenz-Umgebungsdaten erzeugt. Die Referenz-Trajektoriendaten und die Referenz-Umgebungsdaten werden an das Folgefahrzeug übertragen und durch einen Trajektorienvergleich wird anhand der erzeugten Soll-Trajektorie und der übertragenen Referenz-Trajektoriendaten eine Trajektorienähnlichkeit bestimmt, wobei quantifiziert wird, ob und wie stark sich die Soll-Trajektorie und die Scout-Trajektorie unterscheiden. Durch einen Umgebungsdatenvergleich anhand der erfassten Folgefahrzeug-Umgebungsdaten und der übertragenen Referenz-Umgebungsdaten wird eine Umgebungsdatenähnlichkeit bestimmt, wobei, wenn die Trajektorienähnlichkeit und/oder die Umgebungsähnlichkeit einen bestimmten Schwellenwert übersteigt, eine automatische Steuerung des Folgefahrzeugs aktiviert wird. Wenn dagegen die Trajektorienähnlichkeit und/oder die Umgebungsähnlichkeit einen bestimmten Schwellenwert nicht übersteigt, wird ein sicherer Fahrmodus des Folgefahrzeugs aktiviert.

Die zu befahrende Strecke wird also in mehreren Stufen auf ihre Befahrbarkeit überprüft. Zunächst wird geprüft, ob die von einem Scout-Fahrzeug befahrene Trajektorie mit einer automatisch dafür erzeugten Trajektorie übereinstimmt. Ein Folgefahrzeug überprüft dann, ob seine eigene Soll-Trajektorie mit der Trajektorie des Scout-Fahrzeugs, beziehungsweise mit einer als automatisch befahrbar bewerteten Trajektorie übereinstimmt. Somit wird vorteilhafterweise eine hohe Redundanz und damit eine hohe Sicherheit erreicht. Durch einen zusätzlichen Vergleich von Umgebungsdaten kann dabei laufend überprüft werden, ob sich die Bedingungen auf der Strecke seit dem Befahren durch das Scout-Fahrzeug geändert haben, ob also eine zuvor automatisch befahrene Strecke auch weiterhin sicher automatisch befahren werden kann.

Als "Trajektorie" wird erfindungsgemäß ein Bewegungspfad bezeichnet, entlang dessen eines der beteiligten Fahrzeuge fahren kann. Insbesondere können darunter tatsächlich gefahrene und geplante Bewegungspfade verstanden werden. Insbesondere kann die Trajektorie beliebig lang oder kurz sein, beispielsweise kann sie einen Streckenabschnitt auf einer Fahrbahn oder eine längere Route zwischen zwei geographischen Positionen umfassen.

Als "Trajektorienähnlichkeit" wird erfindungsgemäß ein Maß dafür bezeichnet, das quantitativ den Grad der Ähnlichkeit zweier oder mehrerer Trajektorien angibt. Insbesondere kann dabei ein höherer Wert der Trajektorienähnlichkeit für eine größere Ähnlichkeit stehen. Es kann also bestimmt werden, ob miteinander verglichene Trajektorien im Wesentlichen miteinander übereinstimmen oder wie stark sie voneinander abweichen. Beispielsweise kann dabei der Abstand der Trajektorien voneinander, insbesondere ihr minimaler und maximaler Abstand, berücksichtigt werden. Es können ferner Richtungsänderungen entlang der zu vergleichenden Trajektorien berücksichtigt werden, etwa durch Betrachten der ersten Ableitung der Trajektorien, sodass beispielsweise parallel verlaufende Trajektorien ähnlicher bewertet werden können als solche mit sehr unterschiedlichem Verlauf.

Im ersten Schritt wird eine Strecke oder ein Streckenabschnitt, beispielsweise eine öffentliche Straße, ein Weg innerhalb eines abgeschlossenen Geländes oder in einem Gebäude, von einem Scout-Fahrzeug befahren. Dabei wird zunächst eine Scout-Trajektorie erzeugt, während das Scout-Fahrzeug entlang einer tatsächlichen Ist-Trajektorie geführt wird. Im Falle einer automatischen Erzeugung kann die Scout-Trajektorie etwa von einem Fahrplaner oder einem Navigationssystem des Scout-Fahrzeugs sowie von Assistenzsystemen erzeugt werden. Die Scout-Trajektorie entspricht dann einem errechneten Bewegungspfad des Fahrzeugs. Ferner kann die Scout-Trajektorie auf andere Weise erzeugt werden, etwa manuell, durch Fernsteuerung oder durch anderweitige Vorgabe, etwa durch Erfassen von einer externen Datenbank.

Das Führung des Fahrzeugs erfolgt entlang einer Ist-Trajektorie, die nicht notwendigerweise genau der theoretischen Scout-Trajektorie entspricht. Dies kann beispielsweise dadurch bedingt sein, dass das Fahrzeug Hindernissen, etwa anderen Fahrzeugen, ausweichen muss oder dass die tatsächlichen Gegebenheiten der Strecke nicht exakt den kartographischen Ausgangsdaten für die Planung der Scout-Trajektorie entsprechen. Insbesondere kann eine manuelle Fahrzeugführung erfolgen, etwa durch einen Fahrer oder per Fernsteuerung.

Die Ist-Trajektorie, entlang derer sich das Scout-Fahrzeug tatsächlich bewegt, wird erfasst, wobei etwa satellitengestützte Systeme, aber auch andere, an sich bekannte Verfahren zur Positions- und Routenbestimmung verwendet werden können. Insbesondere wird die Ist-Trajektorie so erfasst, dass ein Abgleich mit der Scout-Trajektorie durchgeführt werden kann. Bei diesem Abgleich wird eine Scout-Trajektorienähnlichkeit bestimmt, durch die der Grad der Ähnlichkeit quantitativ angegeben wird. Es kann also überprüft werden, inwieweit die tatsächlich befahrene Ist-Trajektorie mit der automatisch errechneten Scout-Trajektorie übereinstimmt, ob also eine automatische Steuerung anhand der erzeugten Scout-Trajektorie auf eine fahrbare Trajektorie geführt hätte. Insbesondere entspricht dies einem Autopiloten des Fahrzeugs in einem "passiven Testmodus", welcher der Überprüfung der Entscheidungen des Autopiloten dient. Die erzeugte Scout-Trajektorie muss ausreichend ähnlich zu der tatsächlich gefahrenen Ist-Trajektorie sein, um als automatisch befahrbar bewertet zu werden.

Anhand der Scout-Trajektorie und der Ist-Trajektorie werden Referenz-Trajektoriendaten erzeugt, die etwa alle relevanten Informationen, insbesondere über die Ist-Trajektorie umfassen. Die Referenz-Trajektoriendaten umfassen insbesondere die Ist-Trajektorie sowie Informationen über deren automatische Befahrbarkeit, beispielsweise beurteilt anhand der Scout-Trajektorienähnlichkeit. Diese Referenz-Trajektoriendaten werden an das Folgefahrzeug übertragen und können nun von diesem verarbeitet werden. Die Übertragung kann auf verschiedene, an sich bekannte Weisen erfolgen, insbesondere mittels einer Funkverbindung, etwa direkt oder indirekt über ein Netzwerk zur Datenübertragung.

Ferner umfasst das Scout-Fahrzeug Scout-Sensoren, durch die Scout-Umgebungsdaten erfasst werden. Diese Umgebungsdaten charakterisieren die befahrene Strecke, sie betreffen also etwa Merkmale des befahrenen Untergrunds, zum Beispiel den Streckenverlauf, Fahrbahnmarkierungen oder den Zustand des Bodenbelags, Hinweisschilder, Bauwerke, Pflanzen und landschaftliche Merkmale in der Umgebung der Strecke. Die verwendeten Sensoren sind an sich bekannt und können beliebig kombiniert werden.

Um auch dem Folgefahrzeug zu ermöglichen, die Scout-Umgebungsdaten zu verarbeiten, werden Referenz-Umgebungsdaten erzeugt, die etwa alle relevanten Informationen über die Scout-Umgebungsdaten umfassen. Diese Referenz-Umgebungsdaten werden, insbesondere zusammen mit den oben genannten Referenz-Trajektoriendaten, an das Folgefahrzeug übertragen und können nun von diesem verarbeitet werden. Die Übertragung kann wiederum auf verschiedene, an sich bekannte Weisen erfolgen, insbesondere mittels einer Funkverbindung, etwa direkt oder indirekt über ein Netzwerk zur Datenübertragung.

Nachdem das Scout-Fahrzeug die Ist-Trajektorie befahren hat, werden die bei dieser Fahrt erfassten Daten verwendet, um zu überprüfen, ob das Folgefahrzeug die Trajektorie automatisch befahren kann:
Zunächst wird, etwa durch einen Fahrplaner des Folgefahrzeugs, eine Soll-Trajektorie erzeugt, entlang derer das Folgefahrzeug automatisch gesteuert werden soll. Insbesondere können das Scout-Fahrzeug und das Folgefahrzeug ähnliche oder funktionsgleiche Fahrplaner umfassen, die unter den gleichen Bedingungen funktionsbedingt zumindest annähernd identische Trajektorien berechnen. Es können jedoch auch verschiedene Fahrplaner verwendet werden oder ähnliche Fahrplaner können aufgrund veränderter Umstände zu verschiedenen Ergebnissen gelangen.

Das Folgefahrzeug empfängt die Referenz-Trajektoriendaten und führt einen Trajektorienvergleich durch, wobei insbesondere die Soll-Trajektorie mit der Scout-Trajektorie verglichen wird. Es werden zumindest einander entsprechende Abschnitte der Trajektorien betrachtet. Damit wird quantifiziert, ob und wie stark sich die von den Systemen des Scout-Fahrzeugs und des Folgefahrzeugs erzeugten Trajektorien unterscheiden.

Ferner umfasst das Folgefahrzeug Folgefahrzeug-Sensoren, durch die Folgefahrzeug-Umgebungsdaten erfasst werden. Diese Sensoren können dabei im Wesentlichen die gleichen Merkmale der Strecke und der Umgebung erfassen wie die Sensoren des Scout-Fahrzeugs, allerdings werden nicht notwendigerweise die gleichen Sensortypen verwendet und die Anzahl der Sensoren kann sich unterscheiden. Wesentlich ist, dass die Folgefahrzeug-Umgebungsdaten und die Scout-Umgebungsdaten zumindest teilweise vergleichbare Ergebnisse liefern, beispielsweise indem sie die Position bestimmter Bauwerke am Rand der Strecke identifizieren oder andere Strukturen detektieren, etwa eine Fahrbahnmarkierung oder Verkehrsschilder.

Die Folgefahrzeug-Umgebungsdaten und die Referenz-Umgebungsdaten werden im Folgefahrzeug miteinander verglichen und es wird eine Umgebungsähnlichkeit bestimmt. Durch eine Prüfung der Umgebungsähnlichkeit kann sichergestellt werden, dass sich das Folgefahrzeug tatsächlich auf der gleichen Trajektorie wie das Scout-Fahrzeug befindet und es kann überprüft werden, ob und in wieweit sich die Merkmale der zu befahrenden Strecke verändert haben, nachdem diese von dem Scout-Fahrzeug befahren wurde. Beispielsweise kann festgestellt werden, ob seitdem der Verlauf der Fahrbahn geändert wurde, etwa bei einer Baustelle, und ob diese Änderungen so gravierend sind, dass die Strecke möglicherweise nicht mehr sicher automatisch befahrbar ist.

Für die Entscheidung, ob eine Trajektorie sicher automatisch vom Folgefahrzeug befahren werden kann, können etwa Schwellenwerte für die Trajektorienähnlichkeiten und für die Umgebungsähnlichkeit bestimmt werden. Diese können fest definiert sein oder variabel bestimmbar sein. Sind die Ähnlichkeiten groß genug, so wird die automatische Steuerung des Folgefahrzeugs für die Soll-Trajektorie aktiviert, das heißt, die automatisierte Fahrt des Folgefahrzeugs entlang der Soll-Trajektorie wird freigegeben.

Das Folgefahrzeug erfasst insbesondere weitere Daten zur automatischen Steuerung. Dazu können weitere Sensoren vorhanden sein oder es können die gleichen Sensoren wie für den Abgleich mit den Scout-Umgebungsdaten verwendet werden. Beispielsweise können Daten über bewegte Objekte in der näheren Umgebung des Folgefahrzeugs erfasst werden, von denen das Folgefahrzeug Abstand halten oder denen es ausweichen muss. Diese Daten sind für den Abgleich mit den Scout-Umgebungsdaten nicht relevant, da sie keine Merkmale der befahrenen Strecke sind, sondern vom einzelnen Fahrzeug abhängen und sich typischerweise kurzfristig ändern.

Falls die Schwellenwerte nicht erreicht oder überschritten werden, so wird erfindungsgemäß ein sicherer Fahrmodus des Folgefahrzeugs aktiviert. Bei dem sicheren Fahrmodus kann das Folgefahrzeug auf einer für die automatische Steuerung ungeeigneten Trajektorie sicher geführt werden. Beispielsweise kann die Umgebungsdatenähnlichkeit dann den bestimmten Schwellenwert nicht mehr erreichen, wenn sich die Streckenführung geändert hat, nachdem das Scout-Fahrzeug die Scout-Umgebungsdaten erfasst hat. Beispielsweise kann eine Baustelle oder eine Absperrung bei einem Unfall dazu führen, dass auf eine andere Fahrspur ausgewichen werden muss und die alternative Strecke nicht mehr als automatisch fahrbar bewertet wird. Insbesondere kann in dem sicheren Fahrmodus die Geschwindigkeit des Fahrzeugs verringert werden, gegebenenfalls bis zum Halt des Fahrzeugs an einer geeigneten Stelle. Ferner kann ein Fahrer des Folgefahrzeugs benachrichtigt werden und die manuelle Steuerung des Folgefahrzeugs übernehmen, wobei sich der Fahrer im Folgefahrzeug befinden kann oder das Folgefahrzeug ferngesteuert werden kann.

Die Benachrichtigung des Fahrers kann beispielsweise durch die Ausgabe eines akustischen und/oder visuellen Warnsignals erfolgen. Während sich der Fahrer, während die automatische Steuerung aktiviert ist, mit anderen Aufgaben beschäftigen kann, übernimmt er nun die Steuerung manuell. Dabei kann die manuelle Steuerung dennoch durch verschiedene Assistenzsysteme unterstützt werden, beispielsweise durch einen Spurhalteassistenten, einen Abstandstempomat und/oder Spurwechselassistenten. Ferner kann eine bestimmte Dauer für den Übergang von der automatischen zur manuellen Steuerung vorgesehen sein, wobei beispielsweise das Folgefahrzeug an einer geeigneten Stelle zum Halt gebracht wird, wenn der Fahrer die Steuerung nicht innerhalb der bestimmten Übergangsdauer übernimmt.

Bei einer Weiterbildung des erfindungsgemäßen Verfahrens wird bei dem sicheren Fahrmodus des Folgefahrzeugs eine manuelle Steuerung des Folgefahrzeugs aktiviert, wobei das Folgefahrzeug durch einen Folgefahrzeug-Fahrer entlang einer Ersatztrajektorie geführt wird und die Ersatztrajektorie mittels der Folgefahrzeug-Sensoren erfasst wird. Dabei werden die Referenz-Trajektoriendaten anhand der erfassten Ersatztrajektorie neu erzeugt und die Referenz-Umgebungsdaten werden anhand der Folgefahrzeug-Umgebungsdaten neu erzeugt. Dies erlaubt vorteilhafterweise eine dauernde Aktualisierung der Referenz-Trajektoriendaten und Referenz-Umgebungsdaten.

Das Folgefahrzeug übernimmt in diesem Fall die Rolle des Scout-Fahrzeugs und befährt manuell gesteuert eine Trajektorie, die zuvor als nicht automatisch befahrbar erkannt wurde. Dabei werden Daten zu der Soll-Trajektorie und der tatsächlich befahrenen Ersatztrajektorie des Folgefahrzeugs zur Erzeugung der Referenz-Trajektoriendaten verwendet, ferner werden die Folgefahrzeug-Umgebungsdaten zur Basis neu erzeugter Referenz-Umgebungsdaten. Diese Daten können dann wiederum anderen Fahrzeugen zur Verfügung gestellt werden, um diesen ein automatisches befahren der Trajektorie zu ermöglichen.

Bei einer Ausbildung wird das Scout-Fahrzeug entlang der Ist-Trajektorie durch einen Scout-Fahrer manuell gesteuert. In diesem Fall ist vorteilhafterweise eine Überprüfung der Scout-Trajektorie durch einen menschlichen Fahrer vorgesehen.

Zur manuellen Steuerung des Scout-Fahrzeugs kann ein direkter Zugriff eines im Scout-Fahrzeug befindlichen Fahrers auf die Steuereinrichtungen des Scout-Fahrzeugs ermöglicht werden, beispielsweise durch das Lenkrad oder Pedale des Scout-Fahrzeugs. Ferner kann eine Fernsteuerung des Scout-Fahrzeugs vorgesehen sein. Der Fahrer kann dabei durch Fahrerassistenzsysteme des Scout-Fahrzeugs unterstützt werden, die einen bestimmten Grad der Automatisierung erlauben. In diesem Fall wird die Ist-Trajektorie des Scout-Fahrzeugs teilweise anhand manueller Eingaben und teilweise automatisch bestimmt.

Bei einer weiteren Ausbildung werden die Referenz-Trajektoriendaten und/oder die Referenz-Umgebungsdaten ferner anhand der Soll-Trajektorie und/oder der Folgefahrzeug-Umgebungsdaten erzeugt. Dies erlaubt es vorteilhafterweise, die Referenz-Trajektoriendaten und -Umgebungsdaten dauernd zu aktualisieren.

Insbesondere können Daten von Folgefahrzeugen, die einen Streckenabschnitt oder eine Trajektorie automatisiert befahren haben, verwendet werden, um den bestehenden Datensatz zu überprüfen, zu vervollständigen, zu erneuern und/oder zu aktualisieren. Beispielsweise können sich einige Umgebungsdaten mit der Zeit verändern, etwa die Vegetation am Straßenrand im Laufe des Jahres oder Plakatwände, ferner können etwa Alterungserscheinungen oder Erneuerungen, etwa des Fahrbahnbelags oder von Verkehrszeichen auf der Fahrbahn, auftreten. Es können insbesondere Filteralgorithmen verwendet werden, um zu erkennen, welche Veränderungen lediglich eine Aktualisierung der bestehenden Datensätze erforderlich machen oder welche Veränderungen so gravierend sind, dass die automatische Befahrbarkeit der Trajektorie in Frage steht.

Bei einer Weiterbildung werden die Scout-Trajektorie, die Scout-Umgebungsdaten, die Soll-Trajektorie, die Folgefahrzeug-Umgebungsdaten und/oder die Ersatztrajektorie an einen externen Server übertragen. Die Übertragung der Daten kann so in vorteilhafter Weise durch den externen Server verwaltet werden und es wird ein größerer zeitlicher und räumlicher Versatz beim Befahren der Trajektorie durch das Scout-Fahrzeug und das Folgefahrzeug ermöglicht.

Insbesondere können Folgefahrzeuge beim automatischen Befahren einer Trajektorie die von ihnen erzeugte und schließlich befahrene Soll-Trajektorie und die von ihnen erfassten Umgebungsdaten an den Server übertragen.

Insbesondere kann der externe Server die an ihn übertragenen Daten speichern und verwalten. Ferner können Daten auch über eine bidirektionale Verbindung an die Fahrzeuge übertragen werden, sodass keine direkte Verbindung zwischen den Fahrzeugen notwendig ist.

Bei einer Ausbildung werden die Referenz-Trajektoriendaten und/oder die Referenz-Umgebungsdaten durch den externen Server erzeugt und von dem externen Server an das Folgefahrzeug übertragen. Es kann somit vorteilhafterweise eine zentrale Verwaltung der Referenzdaten bereitgestellt werden.

Verschiedene an den Server übertragene Daten zu automatisch befahrbaren Trajektorien und die entsprechenden Umgebungsdaten können so auf vielfältige Weise miteinander verknüpft und verarbeitet werden. Insbesondere können Daten aus verschiedenen Quellen, etwa bei mehrfachem Befahren der Trajektorie durch Scout-Fahrzeuge, verwendet werden, beispielsweise um Trajektoriendaten und/oder Umgebungsdaten zu vervollständigen oder zu aktualisieren. Die zentrale Verwaltung der Referenz-Trajektoriendaten und -Umgebungsdaten erlaubt es ferner, die Verteilung dieser Daten an Folgefahrzeuge flexibel und vorausschauend zu gestalten. Beispielsweise können die relevanten Daten bereits bei der Planung einer Fahrt übertragen werden, insbesondere ohne dass dazu eine dauernde Verbindung des Folgefahrzeugs mit externen Datenquellen wie einem Scout-Fahrzeug und/oder einem externen Server bestehen muss. Ferner können Referenz-Trajektoriendaten und -Umgebungsdaten durch den externen Server gebündelt und beliebig kombiniert werden.

Auf diese Weise kann ferner die Erzeugung der Referenz-Trajektoriendaten und der Referenz-Umgebungsdaten zentral optimiert werden, ohne dass dazu etwa Aktualisierungen einer Software des Scout-Fahrzeugs nötig ist.

Insbesondere kann vorgesehen sein, dass von dem externen Server gespeicherte Streckenabschnitte als automatisch befahrbar oder nicht automatisch befahrbar gekennzeichnet werden können. Beispielsweise können Referenz-Trajektoriendaten und/oder Referenz-Umgebungsdaten zu einem bestimmten Streckenabschnitt als nicht automatisch befahrbar gekennzeichnet werden, wenn für ein oder mehrere Folgefahrzeuge wesentliche Abweichungen erkannt wurden und diese daraufhin den sicheren Fahrmodus aktiviert haben. Insbesondere können auf der Basis der von solchen Folgefahrzeugen erfassten Daten neue Referenz-Trajektoriendaten und Referenz-Umgebungsdaten erzeugt werden. Zudem kann nach dem Erneuern des Datensatzes ein Streckenabschnitt wieder automatisch befahrbar gekennzeichnet werden.

Bei einer Ausbildung werden die Referenz-Trajektoriendaten und/oder die Referenz-Umgebungsdaten ferner anhand von Zusatzdaten erzeugt. Dies erlaubt vorteilhafterweise die Einbeziehung weiterer Daten.

Beispielsweise können Daten von externen Datenquellen verwendet werden, etwa aus Datenbanken oder dem Internet. Ferner können manuelle Ergänzungen, Veränderungen und/oder Korrekturen vorgenommen werden, beispielsweise durch manuelles Editieren der Daten. Dies kann insbesondere bei der Verwaltung der Daten und Erzeugung der Referenz-Trajektoriendaten und -Umgebungsdaten auf einem externen Server erfolgen.

Bei einer weiteren Ausbildung aktiviert ein Folgefahrzeug-Fahrer den sicheren Fahrmodus des Folgefahrzeugs. Dadurch kann vorteilhafterweise eine manuelle Überprüfung der automatischen Befahrbarkeit einer Soll-Trajektorie durchgeführt werden.

Insbesondere kann der Folgefahrzeug-Fahrer bewerten, ob er die erzeugte Soll-Trajektorie für sinnvoll und sicher automatisch befahrbar hält. Ferner können ihm die Referenz-Trajektoriendaten ausgegeben werden. Es können ferner Informationen über die Umgebungsdaten, insbesondere die erfindungsgemäß bestimmte Umgebungsähnlichkeit und/oder Trajektorienähnlichkeit, ausgegeben werden. Dabei kann vorgesehen sein, dass der Folgefahrzeug-Fahrer in die Steuerung des Folgefahrzeugs eingreifen kann, um die Führung selbst zu übernehmen.

Bei einer Weiterbildung werden durch die Scout-Sensoren und die Folgefahrzeugsensoren Bilddaten erfasst. Dadurch können vorteilhafterweise visuelle Umgebungsdaten erfasst werden.

Diese Daten weisen typischerweise eine sehr hohe Informationsdichte auf und erlauben durch an sich bekannte Verfahren die Erkennung markanter Strukturen in der Umgebung und komplexer Situationen im Verkehr.

Bei einer weiteren Ausbildung wird die Scout-Trajektorie und/oder die Soll-Trajektorie anhand eines Bildverarbeitungssystems erzeugt. Dabei kann wird durch das Bildverarbeitungssystem ferner eine Trajektoriengüte bestimmt. Es kann somit vorteilhafterweise die Erkennungssicherheit des Bildverarbeitungssystems berücksichtigt werden.

Als "Trajektoriengüte" wird erfindungsgemäß ein Maß dafür verstanden, mit wie großen Unsicherheiten die Bestimmung einer Trajektorie verbunden ist. Beispielsweise kann die Scout-Trajektorie anhand von Sensordaten automatisch erzeugt werden. Es kann etwa eine Bilderkennung durchgeführt werden, etwa um Verkehrsschilder zu erkennen und ihren Inhalt zu extrahieren. Dabei kann, beispielsweise bedingt durch suboptimale Sichtverhältnisse, eine Unsicherheit auftreten, die bei der Bewertung der Scout-Trajektorie zu berücksichtigen ist. Ferner weisen die Messwerte der Sensoren bestimmte Varianzen auf, die bei der Bestimmung der Scout-Trajektorie berücksichtigt werden. Insbesondere umfassen die Referenz-Trajektoriendaten Informationen zu der Scout-Trajektoriengüte.

Bei einer Weiterbildung der Erfindung wird durch das Folgefahrzeug ein Anforderungssignal empfangen und anhand des Anforderungssignals wird für das Folgefahrzeug ein Fahrmodus als Scout-Fahrzeug aktiviert. Dadurch kann vorteilhafterweise angefordert werden, dass das Folgefahrzeug die Rolle eines Scout-Fahrzeugs übernimmt und neue Trajektoriendaten und/oder Umgebungsdaten durch das Folgefahrzeug erfasst werden.

Dies bedeutet insbesondere, dass das Folgefahrzeug, das sich typischerweise im automatischen Fahrbetrieb befindet, auf Anforderung übergangsweise als Scout agieren kann. Das Anforderungssignal kann insbesondere auch empfangen werden, wenn die Trajektorienähnlichkeit und/oder die Umgebungsdatenähnlichkeit die Schwellenwerte zum Aktivieren des sicheren Fahrmodus nicht unterschreiten.

Das Anforderungssignal kann auf verschiedene Weise empfangen werden. Beispielsweise kann eine Eingabe eines Nutzers im Folgefahrzeug erfasst werden oder das Anforderungssignal kann von dem externen Server an das Folgefahrzeug übertragen werden. Das Anforderungssignal kann ferner automatisch erzeugt werden, etwa wenn durch ein anderes Kriterium als die Trajektorienähnlichkeit oder die Umgebungsdatenähnlichkeit der Fahrmodus als Scout-Fahrzeug aktiviert werden soll.

Der Fahrmodus des Folgefahrzeugs als Scout-Fahrzeug entspricht im Wesentlichen dem sicheren Fahrmodus, das heißt, es kann zum Beispiel eine manuelle Steuerung des Folgefahrzeugs aktiviert werden, wobei das Folgefahrzeug durch einen Folgefahrzeug-Fahrer entlang einer Ersatztrajektorie geführt wird. Ferner kann die Ersatztrajektorie mittels der Folgefahrzeug-Sensoren erfasst werden. Es können nun die Referenz-Trajektoriendaten anhand der erfassten Ersatztrajektorie und die Referenz-Umgebungsdaten anhand der Folgefahrzeug-Umgebungsdaten neu erzeugt werden.

Bei dem erfindungsgemäßen System zur automatischen Steuerung zumindest eines Folgefahrzeugs mit einem Scout-Fahrzeug umfasst das Scout-Fahrzeug einen Scout-Fahrplaner, durch den eine Scout-Trajektorie für das Scout-Fahrzeug erzeugbar ist. Es umfasst ferner eine Scout-Steuereinrichtung, durch die das Scout-Fahrzeug entlang einer Ist-Trajektorie führbar ist, und Scout-Sensoren, durch die die Ist-Trajektorie des Scout-Fahrzeugs und Scout-Umgebungsdaten erfassbar sind. Das Folgefahrzeug umfasst dabei einen Folgefahrzeug-Fahrplaner, durch den eine Soll-Trajektorie für das Folgefahrzeug erzeugbar ist, sowie Folgefahrzeug-Sensoren, durch die Folgefahrzeug-Umgebungsdaten erfassbar sind. Es umfasst zudem eine Folgefahrzeug-Steuereinrichtung, durch die das Folgefahrzeug entlang der Soll-Trajektorie führbar ist. Dabei sind durch eine Recheneinheit anhand der Ist-Trajektorie des Scout-Fahrzeugs Referenz-Trajektoriendaten erzeugbar und anhand der Scout-Umgebungsdaten sind Referenz-Umgebungsdaten erzeugbar. Die Referenz-Trajektoriendaten und die Referenz-Umgebungsdaten sind an das Folgefahrzeug übertragbar und mittels einer Vergleichseinheit ist durch einen Trajektorienvergleich anhand der erzeugten Soll-Trajektorie und der übertragenen Referenz-Trajektoriendaten eine Trajektorienähnlichkeit bestimmbar, wobei quantifizierbar ist, ob und wie stark sich die Soll-Trajektorie und die Scout-Trajektorie unterscheiden.

Mittels der Vergleichseinheit ist durch einen Umgebungsdatenvergleich anhand der erfassten Folgefahrzeug-Umgebungsdaten und der übertragenen Referenz-Umgebungsdaten eine Umgebungsähnlichkeit bestimmbar. Schließlich ist, wenn die Trajektorienähnlichkeit und/oder die Umgebungsähnlichkeit einen bestimmten Schwellenwert nicht übersteigt, durch die Folgefahrzeug-Steuereinrichtung ein sicherer Fahrmodus des Folgefahrzeugs aktivierbar, wobei die erzeugte Scout-Trajektorie ausreichend ähnlich zu der Ist-Trajektorie sein muss, um als automatisch befahrbar bewertet zu werden.

Das erfindungsgemäße System ist insbesondere ausgebildet, das vorstehend beschriebene erfindungsgemäße Verfahren zu implementieren. Das System weist somit dieselben Vorteile auf wie das erfindungsgemäße Verfahren.

Bei einer Ausbildung des erfindungsgemäßen Systems ist bei dem sicheren Fahrmodus des Folgefahrzeugs eine manuelle Steuerung des Folgefahrzeugs aktivierbar, wobei das Folgefahrzeug durch einen Folgefahrzeug-Fahrer entlang einer Ersatztrajektorie führbar ist und die Ersatztrajektorie mittels der Folgefahrzeug-Sensoren erfassbar ist. Dabei sind die Referenz-Trajektoriendaten anhand der erfassten Ersatztrajektorie neu erzeugbar und die Referenz-Umgebungsdaten sind anhand der Folgefahrzeug-Umgebungsdaten neu erzeugbar.

Dies erlaubt vorteilhafterweise eine Erneuerung und/oder Ergänzung der Referenz-Trajektoriendaten und Referenz-Umgebungsdaten, insbesondere nachdem Abweichungen der Soll-Trajektorie und/oder der Folgefahrzeug-Umgebungsdaten von den alten Referenzdaten erfasst wurden.

Bei einer weiteren Ausbildung sind die Referenz-Trajektoriendaten und/oder die Referenz-Umgebungsdaten ferner anhand der Soll-Trajektorie und/oder der Folgefahrzeug-Umgebungsdaten erzeugbar. Die Referenzdaten können so in vorteilhafter Weise ergänzt werden durch Daten des automatisch geführten Folgefahrzeugs.

Bei einer Weiterbildung sind die Scout-Trajektorie, die Scout-Umgebungsdaten, die Soll-Trajektorie, die Folgefahrzeug-Umgebungsdaten und/oder die Ersatztrajektorie an einen externen Server übertragbar, wobei die Referenz-Trajektoriendaten und/oder die Referenz-Umgebungsdaten durch den externen Server erzeugbar sind und von dem externen Server an das Folgefahrzeug übertragbar sind. Dies ermöglicht in vorteilhafter Weise eine zentrale Verwaltung der Daten.

Insbesondere können Daten aus verschiedenen Quellen kombiniert, vervollständigt und/oder aktualisiert werden. Ferner kann die Erzeugung der Referenz-Trajektoriendaten und/oder Referenz-Umgebungsdaten durch den externen Server erfolgen. Die relevanten Daten können ferner verschiedenen Fahrzeugen zur Verfügung gestellt werden, ohne dass dazu eine direkte Datenverbindung bestehen muss, ferner kann die Übertragung zeitlich versetzt erfolgen.

Die Erfindung wird nun anhand von Ausführungsbeispielen mit Bezug zu den Zeichnungen erläutert.
- Figur 1: zeigt ein Ausführungsbeispiel des erfindungsgemäßen Systems,
- Figur 2: zeigt ein Ausführungsbeispiel des erfindungsgemäßen Verfahrens und
- Figuren 3A und 3B: zeigen ein weiteres Ausführungsbeispiel des erfindungsgemäßen Verfahrens.

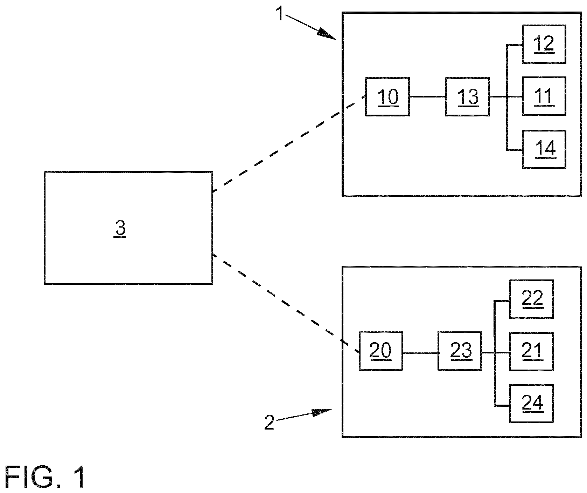

Mit Bezug zu Figur 1 wird ein Ausführungsbeispiel des erfindungsgemäßen Systems erläutert.

Das System umfasst ein Scout-Fahrzeug 1, ein Folgefahrzeug 2 und einen externen Server 3. Das Scout-Fahrzeug 1 und das Folgefahrzeug 2 sind wenigstens zeitweise datentechnisch mit dem externen Server 3 verbunden. Dazu umfasst das System Datenschnittstellen 10 und 20 des Scout-Fahrzeugs 1 und des Folgefahrzeugs 2. Auf diese Weise können Daten von den Fahrzeugen an den externen Server 3 übertragen, dort gespeichert und vom externen Server 3 an die Fahrzeuge übertragen werden. Insbesondere ermöglicht dies einen indirekten Austausch von Daten zwischen dem Scout-Fahrzeug 1 und dem Folgefahrzeug 2, ohne dass eine direkte Verbindung zwischen beiden bestehen muss.

Die datentechnische Verbindung kann insbesondere drahtlos erfolgen, beispielsweise durch ein lokales Netzwerk oder ein größeres Netzwerk, beispielsweise das Internet. Ferner kann die Verbindung über ein Telekommunikationsnetz, etwa ein Telefonnetz, oder ein drahtloses lokales Netzwerk (WLAN) hergestellt werden. Die Verbindung kann auch indirekt über eine weitere Einheit hergestellt werden, die selbst eine Verbindung zu dem externen Server herstellen kann. Beispielsweise kann eine datentechnische Verbindung zwischen der mobilen Einheit und einem mit dem Internet verbundenen Mobiltelefon bestehen, etwa durch ein Datenkabel oder eine Funkverbindung, etwa per Bluetooth. Insbesondere kann die Verbindung zu dem externen Server 3 über das Internet hergestellt werden.

In einem weiteren Ausführungsbeispiel sind das Scout-Fahrzeug 1 und das Folgefahrzeug 2 alternativ oder zusätzlich zu dem externen Server 3 direkt miteinander verbunden. In diesem Fall umfasst das System nicht notwendigerweise den externen Server 3. Der Datenaustausch kann in diesem Fall direkt zwischen den Fahrzeugen erfolgen.

Das Scout-Fahrzeug 1 umfasst eine Steuereinheit 13, mit der die Datenschnittstelle 10, ein Fahrplaner 12 und eine Erfassungseinheit 11 gekoppelt sind. Durch den Fahrplaner 12 des Scout-Fahrzeugs 1 wird eine Scout-Trajektorie erzeugt. Ferner werden durch die Erfassungseinheit 11 Scout-Umgebungsdaten erfasst. Das Scout-Fahrzeug 1 umfasst zudem einen Autopiloten 14, durch den das Scout-Fahrzeug 1 ganz oder teilweise automatisch geführt werden kann.

Im vorliegenden Beispiel wird das Scout-Fahrzeug 1 von einem Fahrer entlang einer Ist-Trajektorie geführt, wobei er von dem Autopiloten 14 unterstützt wird, durch den Fahrmanöver in verschiedenen Automatisierungsgraden ausgeführt werden. Die automatischen Eingriffe des Autopiloten 14 in die Steuerung erfolgen nach an sich bekannten Verfahren, insbesondere durch automatische Eingriffe der Längs- und Querbeschleunigung des Scout-Fahrzeugs 1. Auf diese Weise können Richtung und Betrag der Fahrzeuggeschwindigkeit gesteuert werden. Der Autopilot geht dabei von einer durch den Fahrplaner 12 des Scout-Fahrzeugs 1 bestimmten Scout-Trajektorie aus, allerdings kann sich die tatsächlich vom Scout-Fahrzeug 1 gefahrene Ist-Trajektorie von der erzeugten Scout-Trajektorie unterscheiden, etwa wenn Hindernissen ausgewichen werden muss, wenn der Verkehrsfluss ein Abweichen von der zuvor berechneten Trajektorie erfordert oder wenn der Fahrer des Folgefahrzeugs eine andere Trajektorie fahren möchte. Die ganz oder teilweise automatische Steuerung durch den Autopiloten 14 setzt voraus, dass dies durch die Steuereinheit 13 aktiviert wurde.

Ferner erfassen Sensoren der Erfassungseinheit 11 Bilddaten in der Umgebung des Scout-Fahrzeugs 1, wobei zusätzlich zu Sensoren für den sichtbaren Teil des Lichtspektrums auch Infrarotkameras verwendet werden. Ferner werden Radar- und Lidar-Sensoren verwendet. In weiteren Ausführungsformen können beliebige weitere, geeignete Sensoren des Scout-Fahrzeugs 1 verwendet werden. Die erfassten Umgebungsdaten umfassen charakteristische Merkmale in der Umgebung der befahrenen Trajektorie, beispielsweise Merkmale des befahrenen Untergrunds, zum Beispiel den Streckenverlauf, Fahrbahnmarkierungen oder den Zustand des Bodenbelags, Hinweisschilder, Bauwerke, Pflanzen und landschaftliche Merkmale in der Umgebung der Strecke.

Bei der Erzeugung der Scout-Trajektorie durch den Fahrplaner 12 wird ferner eine Trajektoriengüte bestimmt. Dabei wird quantifiziert, mit welcher Sicherheit die automatisch erzeugte Scout-Trajektorie bestimmt wurde. Beispielsweise kann anhand von durch die Erfassungseinheit 11 bereitgestellten Bilddaten erkannt werden, wenn schlechte Sichtverhältnisse herrschen oder bestimmte Situationen schwer automatisch bewertet werden können. Beispielsweise kann dies durch eine unübersichtliche Verkehrssituation oder schlecht lesbare Verkehrszeichen bedingt sein. In diesem Fall kommt durch die Trajektoriengüte zum Ausdruck, das die erzeugte Scout-Traketorie vorsichtig zu bewerten und die automatische Fahrt gegebenenfalls durch weitere Sicherheitssysteme und redundante Einrichtungen des Fahrzeugs unterstützt werden soll.

Die tatsächliche Bewegung des Scout-Fahrzeugs 1 entlang der Ist-Trajektorie wird durch die Erfassungseinheit 11 erfasst. Die Ist-Trajektorie des Scout-Fahrzeugs 1 wird dabei nach an sich bekannten Verfahren bestimmt, insbesondere anhand der Daten eines satellitengestützten Ortungssystems.

Analog zum Scout-Fahrzeug 1 umfasst auch das Folgefahrzeug 2 eine Steuereinheit 23, die mit der Datenschnittstelle 20, einem Fahrplaner 22 und einer Erfassungseinheit 21 gekoppelt ist. Es umfasst ferner einen Autopilot 24, der das Folgefahrzeug 2 automatisch steuern kann. Durch die Erfassungseinheit 21 werden Folgefahrzeug-Umgebungsdaten erfasst. Es kann ferner vorgesehen sein, dass Sensoren der Erfassungseinheit 21 die tatsächlich gefahrene Trajektorie des Folgefahrzeugs 2 erfassen.

Der externe Server 3 umfasst in dem dargestellten Ausführungsbeispiel eine Recheneinheit, durch die Referenz-Datensätze, insbesondere Referenz-Trajektoriendaten und Referenz-Umgebungsdaten, erzeugbar sind, basierend auf von dem Scout-Fahrzeug 1 oder dem Folgefahrzeug 2 erfassten Daten. Ferner umfassen die Steuereinheiten 13, 23 des Scout-Fahrzeugs 1 und des Folgefahrzeugs 2 Vergleichseinheiten, durch die Vergleiche von Daten über Trajektorien und Umgebungsdaten durchgeführt werden können.

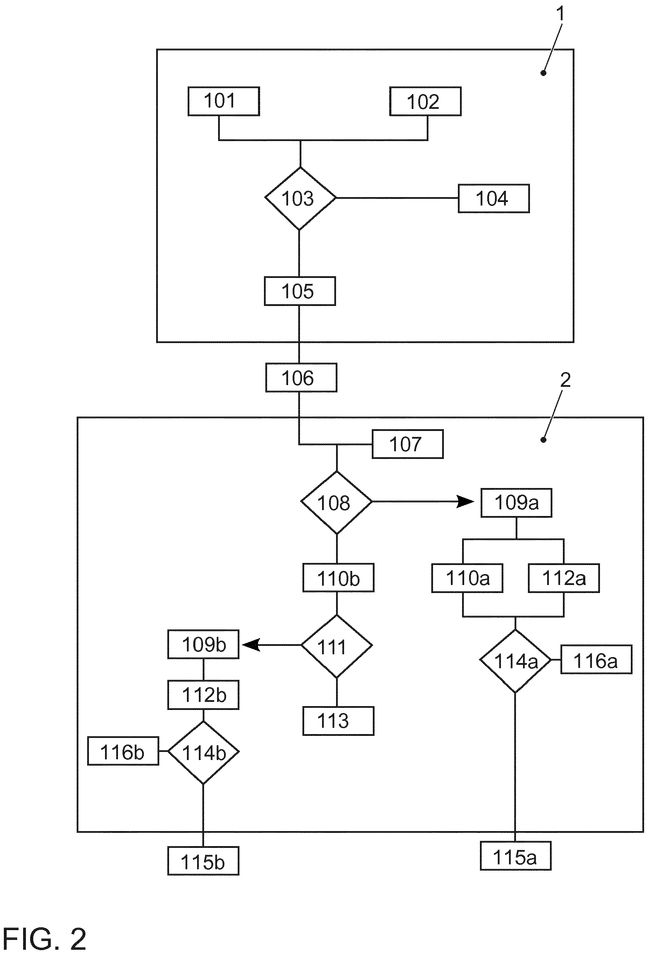

Mit Bezug zu den Figuren 1 und 2 wird ein Ausführungsbeispiel des erfindungsgemäßen Verfahrens erläutert.

Das erfindungsgemäße Verfahren wird in diesem Beispiel durch das in Figur 1 dargestellte System implementiert. Die Darstellung der Schritte, durch die das erfindungsgemäße Verfahren ausgeführt wird, spiegelt nicht notwendigerweise die Reihenfolge der Durchführung einzelner Schritte wider. Diese können ferner mit größerem oder kleinerem zeitlichen Abstand oder gleichzeitig ausgeführt werden. Ferner ist nur beispielhaft dargestellt, welche Schritte durch welche Komponente des Systems ausgeführt wird. Dies kann sich in anderen Ausführungsbeispielen unterscheiden, insbesondere kann der externe Server 3 Schritte ausführen, die hier als zu den Fahrzeugen gehörig dargestellt sind.

Im Scout-Fahrzeug 1 wird durch den Fahrplaner 12 in einem Schritt 101 eine Scout-Trajektorie bestimmt. Das Scout-Fahrzeug 1 wird durch den Fahrer, gegebenenfalls unterstützt durch den Autopiloten 14 des Scout-Fahrzeugs 1, entlang der Ist-Trajektorie geführt. Die Ist-Trajektorie wird in einem Schritt 102 erfasst. In einem folgenden Schritt 103 werden Scout- und Ist-Trajektorie verglichen und es wird somit festgestellt, ob der Fahrplaner 12 im Wesentlichen zu dem gleichen Ergebnis gelangt wie der Fahrer. Ist dies nicht der Fall, so wird das erfindungsgemäße Verfahren in einem Schritt 104 abgebrochen und die Trajektorie wird als nicht automatisch befahrbar bewertet.

In einem nächsten Schritt 105 werden durch Sensoren der Erfassungseinheit 11 Scout-Umgebungsdaten erfasst. Die Erfassung der Scout-Umgebungsdaten kann fortlaufend erfolgen, während in den anderen Schritten die Scout- und Ist-Trajektorie erzeugt und verglichen werden.

In einem Schritt 106 werden die Ist-Trajektorie und Scout-Umgebungsdaten an das Folgefahrzeug 2 übertragen, wobei der eigentlichen Übertragung gegebenenfalls ein Verarbeitungsschritt vorausgeht. Dabei werden insbesondere nur relevante Daten übertragen, etwa solche Scout-Umgebungsdaten, die als besonders kennzeichnend für den Verlauf der Ist-Trajektorie bestimmt wurden, oder diejenigen Teile der Ist-Trajektorie, die als für das Folgefahrzeug 2 relevant erkannt wurden.

Die übertragenen Daten werden als "Referenz-Trajektoriendaten" und "Referenz-Umgebungsdaten" bezeichnet. Diese Referenzdaten werden in einem geeigneten Format übertragen und können insbesondere von dem Folgefahrzeug ausgewertet und mit anderen Daten verglichen werden. In einem Beispiel können die Referenz-Trajektoriendaten der Ist-Trajektorie entsprechen und die Referenz-Umgebungsdaten können den Scout-Umgebungsdaten entsprechen. Ferner können die Referenzdaten aber auch anders erzeugt werden und beispielsweise Trajektorien- und Umgebungsdaten anderer Fahrzeug oder zu anderen Zeitpunkten umfassen. Dabei kann insbesondere eine fortlaufende Aktualisierung der Referenzdaten vorgenommen werden, sodass sichergestellt wird, dass stets möglichst aktuelle und relevante Referenzdaten übertragen werden.

In einem weiteren Ausführungsbeispiel wird alternativ oder zusätzlich zur Ist-Trajektorie die Scout-Trajektorie übertragen.

Dabei kann insbesondere eine bidirektionale Verbindung zwischen Scout-Fahrzeug 1 und Folgefahrzeug 2 zum Austausch von Informationen über die zu übertragenden Daten verwendet werden. Das Folgefahrzeug 2 kann insbesondere die Übertragung von Referenzdaten anfordern und bei seiner Anfrage die Art der angeforderten Daten spezifizieren.

Die Übertragung erfolgt hier wie in Figur 1 gezeigt indirekt über den externen Server 3. Der externer Server 3 übernimmt in diesem Beispiel die Aufgabe eines Speichers und einer Verwaltung für die Referenzdaten. In einem weiteren Ausführungsbeispiel besteht eine direkte Verbindung zwischen dem Scout-Fahrzeug 1 und dem Folgefahrzeug 2.

In einem weiteren Ausführungsbeispiel wird die Ist-Trajektorie nicht an das Folgefahrzeug 2 übertragen, sondern Sensoren der Erfassungseinheit 21 des Folgefahrzeugs 2 erfassen die Ist-Trajektorie des Scout-Fahrzeugs 1, sofern sich dieses in Sichtweite vor ihm befindet.

In einem Schritt 107 wird von dem Fahrplaner 21 des Folgefahrzeugs 2 eine Soll-Trajektorie für das Folgefahrzeug 2 erzeugt. In einem weiteren Schritt 108 werden die Soll-Trajektorie und die Referenz-Trajektoriendaten verglichen und es wird eine Trajektorienähnlichkeit bestimmt. Die Trajektorienähnlichkeit quantifiziert insbesondere die Abweichungen zwischen den verglichenen Trajektorien und ihr Wert ist dabei umso höher, je ähnlicher sich die Trajektorien sind. Der Trajektorienvergleich kann auf verschiedene Weise durchgeführt werden, insbesondere können räumliche Abstände der Trajektorien zueinander quantifiziert werden und es kann der Verlauf der Trajektorien anhand deren Ableitung verglichen werden. Abweichungen der Trajektorien werden insbesondere mittels eines Filteralgorithmus danach gewichtet, wie relevant sie für die automatische Befahrbarkeit der Soll-Trajektorie sind. Beispielsweise wird ein verkehrsbedingtes Ausweichen wegen eines einscherenden Fahrzeugs als weniger relevant gewichtet als eine deutliche Abweichung der Fahrtrichtung, etwa aufgrund einer Baustelle. Andere Abweichungen können stärker berücksichtigt werden, etwa rasche Richtungsänderungen oder Fahrbahnverschwenkungen, etwa bei einer Baustelle. Insbesondere können bei der Erzeugung der Trajektorienähnlichkeit auch weitere Daten über die bloßen Trajektorien hinaus berücksichtigt werden, beispielsweise von den Systemen zur Erzeugung der Trajektorien.

Unterschreitet die in Schritt 108 bestimmte Trajektorienähnlichkeit einen definierten Schwellenwert, so wird in einem Schritt 109a die automatisch geplante Soll-Trajektorie als nicht sicher automatisch befahrbar bewertet, da das Scout-Fahrzeug 1 nicht die automatisch erzeugte Soll-Trajektorie befahren hat.

Wird der Schwellenwert dagegen erreicht oder überschritten, so wird die Soll-Trajektorie zunächst als automatisch befahrbar bewertet, da der Fahrplaner 22 des Folgefahrzeugs 2 die gleiche Trajektorie gewählt hat, wie sie zuvor durch das Scout-Fahrzeug befahren wurde. Daraus wird die Information abgeleitet, dass sich das Folgefahrzeug 2 im Wesentlichen auf der gleichen Trajektorie befindet wie zuvor das Scout-Fahrzeug 1. In einem folgenden Schritt 110b werden Folgefahrzeug-Umgebungsdaten erfasst. Dies erfolgt analog zur Erfassung der Scout-Umgebungsdaten durch das Scout-Fahrzeug 1 in Schritt 105.

In einem Schritt 111 werden nun die Referenz-Umgebungsdaten, die in Schritt 106 an das Folgefahrzeug 2 übertragen worden sind, mit den erfassten Folgefahrzeug-Umgebungsdaten verglichen. Für die Umgebungsdaten-Ähnlichkeit ist ein Schwellenwert bestimmt, bei dessen Unterschreiten in einem Schritt 109b die automatisch geplante Soll-Trajektorie als nicht automatisch befahrbar bewertet wird. Überschreitet jedoch die Umgebungsdaten-Ähnlichkeit den Schwellwert, so wird die Soll-Trajektorie als automatisch befahrbar bewertet. In einem Schritt 113 wird dann die automatische Steuerung des Folgefahrzeugs 2 entlang der Soll-Trajektorie aktiviert. In diesem Fall übernimmt der Autopilot 24 des Folgefahrzeugs 2 die Steuerung des Folgefahrzeugs 2 in Längs- und Querrichtung. Insbesondere erfolgt dies anhand von Daten, die durch die Erfassungseinheit 21 erfasst werden, etwa Informationen über Positionen und die Bewegung andere Verkehrsteilnehmer, den Fahrbahnverlauf, Hindernisse auf der Fahrbahn und verkehrsrechtliche Einschränkungen wie Geschwindigkeitsbeschränkungen oder Überholverbote.

Wenn die in Schritt 108 bestimmte Trajektorienähnlichkeit und/oder die in Schritt 111 bestimmte Umgebungsdaten-Ähnlichkeit den jeweils bestimmten Schwellenwert nicht erreichen, so wird in Schritt 109a, 109b die Soll-Trajektorie als nicht automatisch befahrbar bewertet und die automatische Steuerung wird nicht aktiviert. Abweichungen der Trajektoriendaten und/oder Umgebungsdaten deuten insbesondere darauf hin, dass sich für die Soll-Trajektorie charakteristische Merkmale von Merkmalen der Scout-Trajektorie unterscheiden, dass sich also etwa seit dem Befahren der Strecke durch das Scout-Fahrzeug 1 Änderungen ergeben haben. Es wird daher davon ausgegangen, dass sich auch Merkmale der Trajektorie, die für die Sicherheit einer automatischen Fahrt relevant sind, verändert haben und die Bewertung der automatischen Befahrbarkeit der Trajektorie durch das Scout-Fahrzeug 1 nicht (mehr) zutreffend ist.

In Schritt 109a, 109b wird daher ein sicherer Fahrmodus des Folgefahrzeugs 2 aktiviert, insbesondere mit einer manuellen Steuerung durch den Fahrer des Folgefahrzeugs 2. Der Fahrer führt das Folgefahrzeug 2 entlang einer tatsächlich gefahrenen Ersatztrajektorie. In anderen Ausführungsbeispielen kann sich der Fahrer beispielsweise im Scout-Fahrzeug 1 befinden oder von einer Einsatzzentrale aus über den externen Server 3 Steuersignale an das Folgefahrzeug 2 übertragen.

Das Folgefahrzeug 2 übernimmt nun eine Rolle analog zu dem Scout-Fahrzeug 1 in den oben beschriebenen Schritten 101 bis 105: Wurde die Soll-Trajektorie aufgrund der unzureichenden Trajektorienähnlichkeit in Schritt 109a als nicht automatisch befahrbar bewertet, so werden in einem folgenden Schritt 110a Folgefahrzeug-Umgebungsdaten erfasst. Dies erfolgt analog zur Erfassung der Scout-Umgebungsdaten durch das Scout-Fahrzeug 1 in Schritt 105. Wurden dagegen die Soll-Trajektorie in Schritt 109b aufgrund zu niedriger Umgebungsdaten-Ähnlichkeit als nicht automatisch befahrbar bewertet, so wurden die Folgefahrzeug-Umgebungsdaten bereits in Schritt 110b erfasst und können daher für das weitere Verfahren genutzt werden.

Es wird nun in einem Schritt 112a, 112b die Ersatztrajektorie erfasst, entlang derer das Folgefahrzeug 2 manuell gesteuert wird. Diese Ersatztrajektorie wird in einem weiteren Schritt 114a, 114b mit der in Schritt 107 erzeugten Soll-Trajektorie des Folgefahrzeugs 2 verglichen. Überschreitet die Trajektorienähnlichkeit der beiden Trajektorien einen bestimmten Schwellenwert, so wird dies als manuelle Bestätigung der automatisch erzeugten Soll-Trajektorie interpretiert. Die in Schritt 107 erzeugte Soll-Trajektorie ist also automatisch befahrbar und es werden in einem Schritt 115a, 115b anhand der tatsächlichen, manuellen Ersatztrajektorie des Folgefahrzeugs 2 und der Folgefahrzeug-Umgebungsdaten neue Referenz-Trajektoriendaten und Referenz-Umgebungsdaten erzeugt. Ist die erforderliche Trajektorienähnlichkeit nicht gegeben, so wird die Soll-Trajektorie als nicht automatisch befahrbar bewertet und das Verfahren wird in einem Schritt 116a, 116b abgebrochen.

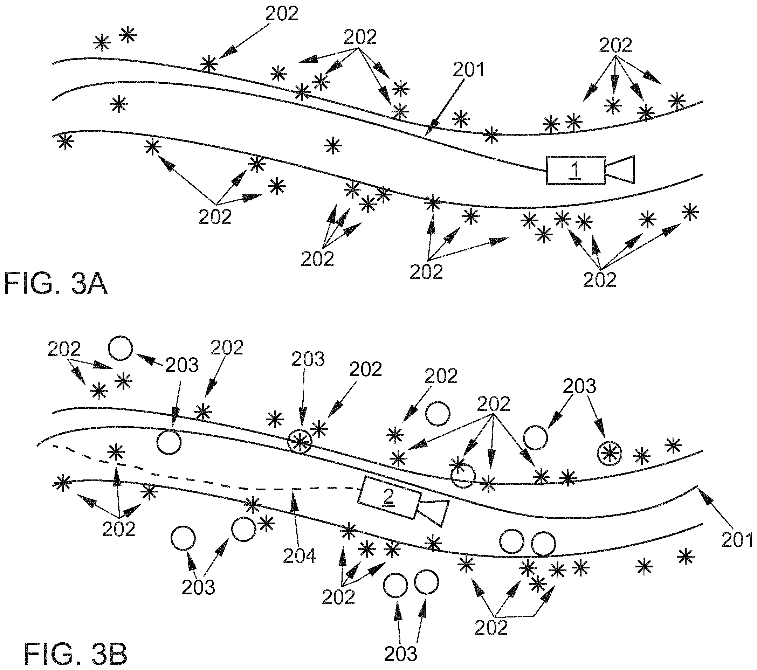

Anhand der Figuren 3A und 3B wird ein weiteres Ausführungsbeispiel des erfindungsgemäßen Verfahrens erläutert. Das erfindungsgemäße Verfahren wird in diesem Beispiel durch das in Figur 1 dargestellte System implementiert.

Zunächst befährt das Scout-Fahrzeug 1 eine Strecke entlang einer Ist-Trajektorie 201, wobei die Ist-Trajektorie 201 erfasst wird. Währenddessen erfassen die Sensoren der Erfassungseinheit 11 des Scout-Fahrzeugs 1 Scout-Umgebungsdaten 202, die Scout-Orientierungspunkte umfassen und in den Figuren 3A und 3B als Sterne dargestellt sind. Im dargestellten Fall sind dies Verkehrszeichen auf der Fahrbahn und am Streckenrand sowie Bauwerke und landschaftliche Besonderheiten, etwa einzelne Bäume, in der Umgebung der Ist-Trajektorie 201.

Zugleich wird durch den Fahrplaner 12 des Scout-Fahrzeugs 1 eine Scout-Trajektorie erzeugt. Diese wird mit der Ist-Trajektorie 201 verglichen. Überschreitet die dabei erzeugte Trajektorienähnlichkeit einen bestimmten Schwellenwert, so hat der Fahrer manuell die gleiche Trajektorie gewählt wie der automatische Fahrplaner 12 und die automatisch generierte Scout-Trajektorie wird als automatisch befahrbar bewertet. Anhand der Ist-Trajektorie 201 und der Scout-Trajektorie des Scout-Fahrzeugs 1 werden Referenz-Trajektoriendaten erzeugt und an das Folgefahrzeug 2 übertragen. Ferner werden anhand der Scout-Umgebungsdaten Referenz-Umgebungsdaten erzeugt und an das Folgefahrzeug 2 übertragen. Im dargestellten Beispiel umfassen die Referenz-Umgebungsdaten die Scout-Orientierungspunkte 202.

Das Folgefahrzeug 2 befährt die gleiche Strecke. Der Fahrplaner 22 des Folgefahrzeugs 2 erzeugt eine Soll-Trajektorie 204. Diese werden mit der Soll-Trajektorie 204 verglichen. Im dargestellten Fall ist die Trajektorienähnlichkeit geringer als ein bestimmter Schwellenwert, die Trajektorien sind also deutlich unterschiedlich. Abweichungen der Trajektorien werden insbesondere mittels eines Filteralgorithmus danach gewichtet, wie relevant sie für die automatische Befahrbarkeit der Soll-Trajektorie 204 sind. Beispielsweise wird ein verkehrsbedingtes Ausweichen wegen eines einscherenden Fahrzeugs als weniger relevant gewichtet als eine deutliche Abweichung der Fahrtrichtung, etwa aufgrund einer Baustelle. Andere Abweichungen können stärker berücksichtigt werden, etwa rasche Richtungsänderungen oder Fahrbahnverschwenkungen, etwa bei einer Baustelle.

Das Folgefahrzeug 2 erfasst ferner eigene Folgefahrzeug-Umgebungsdaten mit Folgefahrzeug-Orientierungspunkten 203 und vergleicht diese mit den Referenz-Umgebungsdaten. Dabei stimmen im dargestellten Fall nur wenige der Scout-Orientierungspunkte 202 mit den durch das Folgefahrzeug 2 erfassten Folgefahrzeug-Orientierungspunkten 203 überein. Beispielsweise stimmen Verkehrszeichen oder die Positionen von Verkehrsbauwerken nicht mehr überein.

Bei dem Vergleich wird eine Priorisierung der verschiedenen Merkmale vorgenommen. Beispielsweise hat es weniger gravierende Folgen für die Umgebungsdaten-Ähnlichkeit, wenn ein Teil der Bepflanzung am Rand der Strecke sich geändert hat, als wenn der Verlauf einer Fahrspur geändert wurde. Ferner werden Fahrzeugdaten des Scout-Fahrzeugs 1 berücksichtigt, etwa seine Höhe, die mit der Höhe des Folgefahrzeugs 2 nicht identisch sein muss.

In einem Vergleich wird eine Umgebungsdaten-Ähnlichkeit bestimmt, die im dargestellten Fall einen zuvor bestimmten Schwellenwert nicht erreicht. Daher wird für das Folgefahrzeug 2 die automatische Steuerung anhand des Autopiloten 24 entlang der Soll-Trajektorie 204 nicht aktiviert, sondern der Fahrer des Folgefahrzeugs 2 übernimmt die Führung des Folgefahrzeugs 2 entlang einer Ersatztrajektorie. Wie oben mit Bezug zu Figur 2 dargestellt, übernimmt nun das Folgefahrzeug 2 die Rolle des Scout-Fahrzeugs 1 und überprüft, ob die manuell durch den Fahrer gefahrene Ersatztrajektorie mit der automatisch durch den Fahrplaner 22 erzeugten Soll-Trajektorie 204 übereinstimmt. Ist dies der Fall, so wird die Soll-Trajektorie 204 als automatisch befahrbar bewertet und es werden neue Referenz-Trajektoriendaten erzeugt, ebenso anhand der Folgefahrzeug-Umgebungsdaten neue Referenz-Umgebungsdaten. Diese können dann an ein weiteres nachfolgendes Fahrzeug übertragen werden.

In einem weiteren Ausführungsbeispiel werden von dem externen Server 3 Trajektoriendaten und Umgebungsdaten, insbesondere auch von verschiedenen Fahrzeugen, gespeichert und die Referenzdaten anhand dieser Daten erzeugt und an das Folgefahrzeug 2 übertragen. Durch diese zentrale Speicherung können die Referenzdaten erweitert und/oder aktualisiert werden, beispielsweise anhand der von dem Folgefahrzeug 2 erfassten und an den externen Server 3 übertragenen Folgefahrzeug-Umgebungsdaten: Wird hierbei etwa erfasst, dass einer der Scout-Orientierungspunkte 202 nicht mehr vorhanden ist, beispielsweise weil ein parkendes Fahrzeug am Streckenrand fortbewegt wurde, so kann der auf dem externen Server 3 gespeicherte Datensatz entsprechend angepasst werden. Ein Filteralgorithmus bestimmt dabei, ob die Änderungen geringfügig sind und daher eine Anpassung erfolgen kann oder ob sie die automatische Befahrbarkeit der Scout-Trajektorie 201 einschränken, was eine neue Erfassung von Scout-Umgebungsdaten 202 entlang der Scout-Trajektorie 201 durch ein manuell geführtes Scout-Fahrzeug 1 nötig macht.

In einem weiteren Ausführungsbeispiel wird durch das Folgefahrzeug 2 einer der Folgefahrzeug-Orientierungspunkte 203 nicht mit ausreichender Qualität erfasst, beispielsweise kann ein Verkehrsschild bei schlechten Sichtverhältnissen nicht mit ausreichender Sicherheit automatisch gelesen werden. Es werden nun Folgefahrzeug-Umgebungsdaten, in diesem Beispiel Bilddaten des Verkehrsschildes, an das Scout-Fahrzeug 1 übertragen, dessen Fahrer als Entscheidungsstelle fungiert. Er kann nun entscheiden, ob die automatische Fahrt sicher fortgesetzt werden kann und kann etwa Steuerungssignale an das Folgefahrzeug 2 übertragen, die den Inhalt des Verkehrsschildes wiedergeben. Die Entscheidungsstelle kann ferner über den externen Server 3 in das System eingebunden sein.

Ferner kann in einem weiteren Ausführungsbeispiel eine Reihe weiterer Daten bei der Erzeugung der Referenz-Umgebungsdaten oder Referenz-Trajektoriendaten berücksichtigt werden. Insbesondere greift der externe Server 3 auf weitere Datenquellen über das Internet zu und erfasst dort beispielsweise Daten zu temporären oder permanenten Veränderungen der Streckenführung oder zusätzliche Informationen über eine Trajektorie, etwa einen Straßenabschnitt, wie beispielsweise eine Sperrung für das automatische Befahren.

Bei einem weiteren Ausführungsbeispiel empfängt das Folgefahrzeug 2 von dem externen Server 3 ein Anforderungssignal. Es wird nun für das Folgefahrzeug 2 ein Fahrmodus als Scout-Fahrzeug 1 aktiviert. In dem Ausführungsbeispiel entspricht dieser Fahrmodus als Scout-Fahrzeug 1 dem oben beschriebenen Verhalten für den Fall, dass die Trajektorienähnlichkeit und/oder die Umgebungsdaten-Ähnlichkeit den vorgegebenen Schwellenwert nicht erreicht. Es wird also in diesem Fahrmodus eine manuelle Steuerung des Folgefahrzeugs 2 aktiviert und es erfolgt eine Steuerung entlang einer Ersatztrajektorie. Dabei agiert das Folgefahrzeug 2 als Scout-Fahrzeug 1, es erfasst also Trajektoriendaten und Umgebungsdaten entlang der Ersatztrajektorie. Ein Vergleich der tatsächlich gefahrenen Ersatztrajektorie und der von dem Fahrplaner 22 des Folgefahrzeugs 2 erzeugten Soll-Trajektorie 204 liefert eine Trajektorienähnlichkeit, durch die eine automatische Befahrbarkeit der Ersatztrajektorie festgestellt werden kann. Die erfassten Daten können ferner an den externen Server 3 übertragen werden.

### Bezugszeichenliste

- 1: Scout-Fahrzeug
- 2: Folgefahrzeug
- 3: externer Server; Center
- 10: Datenschnittstelle (Scout-Fahrzeug)
- 11: Sensoren (Scout-Fahrzeug)
- 12: Fahrplaner (Scout-Fahrzeug)
- 13: Steuereinheit (Scout-Fahrzeug)
- 14: Autopilot (Scout-Fahrzeug)
- 20: Datenschnittstelle (Folgefahrzeug)
- 21: Sensoren (Folgefahrzeug)
- 22: Fahrplaner (Folgefahrzeug)
- 23: Steuereinheit (Folgefahrzeug)
- 24: Autopilot (Folgefahrzeug)
- 101: Erzeugung von Scout-Trajektorie
- 102: Erfassen von Ist-Trajektorie
- 103: Vergleich von Scout- und Ist-Trajektorie
- 104: Bewertung der Scout-Trajektorie als nicht automatisiert fahrbar
- 105: Erfassung von Scout-Umgebungsdaten
- 106: Übertragung von Referenzdaten
- 107: Erzeugung von Soll-Trajektorie
- 108: Vergleich von Scout- und Soll-Trajektorie
- 109a, 109b: Aktivierung manuelle Steuerung des Folgefahrzeugs
- 110a, 110b: Erfassung von Folgefahrzeug-Umgebungsdaten
- 111: Vergleich von Scout- und Folgefahrzeug-Umgebungsdaten
- 112a, 112b: Erfassung der tatsächlichen Trajektorie des Folgefahrzeugs
- 113: Aktivieren der automatischen Steuerung des Folgefahrzeugs
- 114a, 114b: Vergleich von Soll-Trajektorie und tatsächlicher Trajektorie des Folgefahrzeugs
- 115a, 115b: Erzeugung neuer Referenzdaten
- 116a, 116b: Bewertung der Soll-Trajektorie als nicht automatisch befahrbar
- 201: Ist-Trajektorie des Scout-Fahrzeugs
- 202: Scout-Orientierungspunkte, Scout-Umgebungsdaten (Sterne)
- 203: Folgefahrzeug-Orientierungspunkte, Folgefahrzeug-Umgebungsdaten (Kreise)
- 204: Soll-Trajektorie des Folgefahrzeugs

## Patentansprüche

1. Verfahren zur automatischen Steuerung zumindest eines Folgefahrzeugs (2), bei dem
für ein Scout-Fahrzeug (1) eine Scout-Trajektorie erzeugt wird,
das Scout- Fahrzeug (1) entlang einer Ist-Trajektorie (201) geführt wird, wobei mittels Scout-Sensoren (11) die Ist-Trajektorie (201) des Scout-Fahrzeugs (1) und Scout-Umgebungsdaten (202) erfasst werden,
für das Folgefahrzeug (2) eine Soll-Trajektorie (204) erzeugt wird und mittels Folgefahrzeug-Sensoren (21) Folgefahrzeug-Umgebungsdaten (203) erfasst werden,
anhand der erzeugten Scout-Trajektorie und der erfassten Ist-Trajektorie (201) eine Scout-Trajektorienähnlichkeit bestimmt wird, wobei die erzeugte Scout-Trajektorie ausreichend ähnlich zu der Ist-Trajektorie (201) sein muss, um als automatisch befahrbar bewertet zu werden, Referenz-Trajektoriendaten erzeugt werden und anhand der Scout-Umgebungsdaten (202) Referenz-Umgebungsdaten erzeugt werden,
die Referenz-Trajektoriendaten und die Referenz-Umgebungsdaten an das Folgefahrzeug (2) übertragen werden,
durch einen Trajektorienvergleich anhand der erzeugten Soll-Trajektorie (204) und der übertragenen Referenz-Trajektoriendaten eine Trajektorienähnlichkeit bestimmt wird, wobei quantifiziert wird, ob und wie stark sich die Soll-Trajektorie (204) und die Scout-Trajektorie (201) unterscheiden,
durch einen Umgebungsdatenvergleich anhand der erfassten Folgefahrzeug-Umgebungsdaten (203) und der übertragenen Referenz-Umgebungsdaten eine Umgebungsdatenähnlichkeit bestimmt wird, wobei,
wenn die Trajektorienähnlichkeit und/oder die Umgebungsähnlichkeit einen bestimmten Schwellenwert übersteigt, eine automatische Steuerung des Folgefahrzeugs (2) aktiviert wird und,
wenn die Trajektorienähnlichkeit und/oder die Umgebungsähnlichkeit einen bestimmten Schwellenwert nicht übersteigt, ein sicherer Fahrmodus des Folgefahrzeugs (2) aktiviert wird.

2. Verfahren gemäß einem der vorhergehenden Ansprüche,
**dadurch gekennzeichnet, dass**
bei dem sicheren Fahrmodus des Folgefahrzeugs (2) eine manuelle Steuerung des Folgefahrzeugs (2) aktiviert wird, wobei
das Folgefahrzeug (2) durch einen Folgefahrzeug-Fahrer entlang einer Ersatztrajektorie geführt wird und die Ersatztrajektorie mittels der Folgefahrzeug-Sensoren (21) erfasst wird, wobei
die Referenz-Trajektoriendaten anhand der erfassten Ersatztrajektorie neu erzeugt werden und
die Referenz-Umgebungsdaten anhand der Folgefahrzeug-Umgebungsdaten neu erzeugt werden.

3. Verfahren gemäß einem der vorhergehenden Ansprüche,
**dadurch gekennzeichnet, dass**
das Scout-Fahrzeug (1) entlang der Ist-Trajektorie (201) durch einen Scout-Fahrer manuell gesteuert wird.

4. Verfahren gemäß einem der vorhergehenden Ansprüche,
**dadurch gekennzeichnet, dass**
die Referenz-Trajektoriendaten und/oder die Referenz-Umgebungsdaten ferner anhand der Soll-Trajektorie (204) und/oder der Folgefahrzeug-Umgebungsdaten (203) erzeugt werden.

5. Verfahren gemäß einem der vorhergehenden Ansprüche,
**dadurch gekennzeichnet, dass**
die Scout-Trajektorie, die Scout-Umgebungsdaten (202), die Soll-Trajektorie (204), die Folgefahrzeug-Umgebungsdaten (203) und/oder die Ersatztrajektorie an einen externen Server (3) übertragen werden.

6. Verfahren gemäß Anspruch 5,
**dadurch gekennzeichnet, dass**
die Referenz-Trajektoriendaten und/oder die Referenz-Umgebungsdaten durch den externen Server (3) erzeugt und
von dem externen Server (3) an das Folgefahrzeug (2) übertragen werden.

7. Verfahren gemäß Anspruch 6,
**dadurch gekennzeichnet, dass**
die Referenz-Trajektoriendaten und/oder die Referenz-Umgebungsdaten ferner anhand von Zusatzdaten erzeugt werden.

8. Verfahren gemäß einem der vorhergehenden Ansprüche,
**dadurch gekennzeichnet, dass**
ein Folgefahrzeug-Fahrer den sicheren Fahrmodus des Folgefahrzeugs (2) aktiviert.

9. Verfahren gemäß einem der vorhergehenden Ansprüche,
**dadurch gekennzeichnet, dass**
durch die Scout-Sensoren (11) und die Folgefahrzeugsensoren (21) Bilddaten erfasst werden.

10. Verfahren gemäß Anspruch 9,
**dadurch gekennzeichnet, dass**
die Scout-Trajektorie und/oder die Soll-Trajektorie anhand eines Bildverarbeitungssystems erzeugt wird, wobei durch das Bildverarbeitungssystem ferner eine Trajektoriengüte bestimmt wird.

11. Verfahren gemäß einem der vorhergehenden Ansprüche,
**dadurch gekennzeichnet, dass**
durch das Folgefahrzeug (2) ein Anforderungssignal empfangen wird und anhand des Anforderungssignals für das Folgefahrzeug (2) ein Fahrmodus als Scout-Fahrzeug (1) aktiviert wird.

12. System zur automatischen Steuerung zumindest eines Folgefahrzeugs (2) mit einem Scout-Fahrzeug (1),
wobei das Scout-Fahrzeug (1) umfasst:
- einen Scout-Fahrplaner (12), durch den eine Scout-Trajektorie für das Scout-Fahrzeug (1) erzeugbar ist,
- eine Scout-Steuereinrichtung (13), durch die das Scout-Fahrzeug (1) entlang einer Ist-Trajektorie (201) führbar ist, und
- Scout-Sensoren (11), durch die die Ist-Trajektorie (201) des Scout-Fahrzeugs (1) und Scout-Umgebungsdaten (202) erfassbar sind;
wobei das Folgefahrzeug (2) umfasst:
- einen Folgefahrzeug-Fahrplaner (22), durch den eine Soll-Trajektorie (204) für das Folgefahrzeug (2) erzeugbar ist,
- Folgefahrzeug-Sensoren (21), durch die Folgefahrzeug-Umgebungsdaten (203) erfassbar sind, und
- eine Folgefahrzeug-Steuereinrichtung (23), durch die das Folgefahrzeug (2) entlang der Soll-Trajektorie (204) führbar ist;
wobei
- durch eine Recheneinheit anhand der Ist-Trajektorie (201) des Scout-Fahrzeugs (1) Referenz-Trajektoriendaten erzeugbar sind und anhand der Scout-Umgebungsdaten (202) Referenz-Umgebungsdaten erzeugbar sind,
- die Referenz-Trajektoriendaten und die Referenz-Umgebungsdaten an das Folgefahrzeug (2) übertragbar sind,
- mittels einer Vergleichseinheit durch einen Trajektorienvergleich anhand der erzeugten Soll-Trajektorie (204) und der übertragenen Referenz-Trajektoriendaten eine Trajektorienähnlichkeit bestimmbar ist, wobei quantifizierbar ist, ob und wie stark sich die Soll-Trajektorie (204) und die Scout-Trajektorie (201) unterscheiden,
- mittels der Vergleichseinheit durch einen Umgebungsdatenvergleich anhand der erfassten Folgefahrzeug-Umgebungsdaten (203) und der übertragenen Referenz-Umgebungsdaten eine Umgebungsähnlichkeit bestimmbar ist, und,
- wenn die Trajektorienähnlichkeit und/oder die Umgebungsähnlichkeit einen bestimmten Schwellenwert nicht übersteigt, durch die Folgefahrzeug-Steuereinrichtung (23) ein sicherer Fahrmodus des Folgefahrzeugs (2) aktivierbar ist, wobei
- die erzeugte Scout-Trajektorie ausreichend ähnlich zu der Ist-Trajektorie (201) sein muss, um als automatisch befahrbar bewertet zu werden.

13. System gemäß Anspruch 12,
**dadurch gekennzeichnet, dass**
bei dem sicheren Fahrmodus des Folgefahrzeugs (2) eine manuelle Steuerung des Folgefahrzeugs (2) aktivierbar ist, wobei
das Folgefahrzeug (2) durch einen Folgefahrzeug-Fahrer entlang einer Ersatztrajektorie führbar ist und die Ersatztrajektorie mittels der Folgefahrzeug-Sensoren (21) erfassbar ist, wobei
die Referenz-Trajektoriendaten anhand der erfassten Ersatztrajektorie neu erzeugbar sind und
die Referenz-Umgebungsdaten anhand der Folgefahrzeug-Umgebungsdaten (203) neu erzeugbar sind.

14. System gemäß Anspruch 12 oder 13,
**dadurch gekennzeichnet, dass**
die Referenz-Trajektoriendaten und/oder die Referenz-Umgebungsdaten ferner anhand der Soll-Trajektorie (204) und/oder der Folgefahrzeug-Umgebungsdaten (203) erzeugbar sind.

15. System gemäß einem der Ansprüche 12 bis 14,
**dadurch gekennzeichnet, dass**
die Scout-Trajektorie, die Scout-Umgebungsdaten (202), die Soll-Trajektorie (204), die Folgefahrzeug-Umgebungsdaten (203) und/oder die Ersatztrajektorie an einen externen Server (3) übertragbar sind, wobei
die Referenz-Trajektoriendaten und/oder die Referenz-Umgebungsdaten durch den externen Server (3) erzeugbar sind und
von dem externen Server (3) an das Folgefahrzeug (2) übertragbar sind.

## Claims

1. Method for automatically controlling at least one following vehicle (2), in which
a scout trajectory is produced for a scout vehicle (1),
the scout vehicle (1) is guided along an actual trajectory (201), the actual trajectory (201) of the scout vehicle (1) and scout environmental data (202) being captured by means of scout sensors (11),
a desired trajectory (204) is produced for the following vehicle (2) and following vehicle environmental data (203) are captured by means of following vehicle sensors (21),
a scout trajectory similarity is determined on the basis of the scout trajectory produced and the captured actual trajectory (201), wherein the scout trajectory produced must be sufficiently similar to the actual trajectory (201) in order to be assessed as automatically drivable, reference trajectory data are produced and reference environmental data are produced on the basis of the scout environmental data (202),
the reference trajectory data and the reference environmental data are transmitted to the following vehicle (2),
a trajectory similarity is determined by means of a trajectory comparison on the basis of the desired trajectory (204) produced and the transmitted reference trajectory data, wherein it is quantified whether and how greatly the desired trajectory (204) and the scout trajectory (201) differ,
an environmental data similarity is determined by means of an environmental data comparison on the basis of the captured following vehicle environmental data (203) and the transmitted reference environmental data, in which case,
if the trajectory similarity and/or the environment similarity exceed(s) a particular threshold value, automatic control of the following vehicle (2) is activated, and,
if the trajectory similarity and/or the environment similarity do(es) not exceed a particular threshold value, a safe driving mode of the following vehicle (2) is activated.

2. Method according to one of the preceding claims,
**characterized in that**
manual control of the following vehicle (2) is activated in the safe driving mode of the following vehicle (2),
the following vehicle (2) being guided along a substitute trajectory by a following vehicle driver and the substitute trajectory being captured by means of the following vehicle sensors (21),
the reference trajectory data being newly produced on the basis of the captured substitute trajectory, and
the reference environmental data being newly produced on the basis of the following vehicle environmental data.

3. Method according to one of the preceding claims,
**characterized in that**
the scout vehicle (1) is manually controlled along the actual trajectory (201) by a scout driver.

4. Method according to one of the preceding claims,
**characterized in that**
the reference trajectory data and/or the reference environmental data are also produced on the basis of the desired trajectory (204) and/or the following vehicle environmental data (203).

5. Method according to one of the preceding claims,
**characterized in that**
the scout trajectory, the scout environmental data (202), the desired trajectory (204), the following vehicle environmental data (203) and/or the substitute trajectory is/are transmitted to an external server (3).

6. Method according to Claim 5,
**characterized in that**
the reference trajectory data and/or the reference environmental data are produced by the external server (3) and
are transmitted from the external server (3) to the following vehicle (2).

7. Method according to Claim 6,
**characterized in that**
the reference trajectory data and/or the reference environmental data are also produced on the basis of additional data.

8. Method according to one of the preceding claims,
**characterized in that**
a following vehicle driver activates the safe driving mode of the following vehicle (2).

9. Method according to one of the preceding claims,
**characterized in that**
image data are captured by the scout sensors (11) and the following vehicle sensors (21).

10. Method according to Claim 9,
**characterized in that**
the scout trajectory and/or the desired trajectory is/are produced using an image processing system, the image processing system also determining a trajectory quality.

11. Method according to one of the preceding claims,
**characterized in that**
the following vehicle (2) receives a request signal and
a driving mode as the scout vehicle (1) is activated on the basis of the request signal for the following vehicle (2).

12. System for automatically controlling at least one following vehicle (2) using a scout vehicle (1), the scout vehicle (1) comprising:
- a scout journey planner (12) which can produce a scout trajectory for the scout vehicle (1),
- a scout control device (13) which can guide the scout vehicle (1) along an actual trajectory (201), and
- scout sensors (11) which can capture the actual trajectory (201) of the scout vehicle (1) and scout environmental data (202);
the following vehicle (2) comprising:
- a following vehicle journey planner (22) which can produce a desired trajectory (204) for the following vehicle (2),
- following vehicle sensors (21) which can capture following vehicle environmental data (203), and
- a following vehicle control device (23) which can guide the following vehicle (2) along the desired trajectory (204);
wherein
- a computing unit can produce reference trajectory data on the basis of the actual trajectory (201) of the scout vehicle (1) and can produce reference environmental data on the basis of the scout environmental data (202),
- the reference trajectory data and the reference environmental data can be transmitted to the following vehicle (2),
- a comparison unit can be used to determine a trajectory similarity by means of a trajectory comparison on the basis of the desired trajectory (204) produced and the transmitted reference trajectory data, wherein it can be quantified whether and how greatly the desired trajectory (204) and the scout trajectory (201) differ,
- the comparison unit can be used to determine an environment similarity by means of an environmental data comparison on the basis of the captured following vehicle environmental data (203) and the transmitted reference environmental data, and,
- if the trajectory similarity and/or the environment similarity do(es) not exceed a particular threshold value, the following vehicle control device (23) can activate a safe driving mode of the following vehicle (2), wherein
- the scout trajectory produced must be sufficiently similar to the actual trajectory (201) in order to be assessed as automatically drivable.

13. System according to Claim 12,
**characterized in that**
manual control of the following vehicle (2) can be activated in the safe driving mode of the following vehicle (2),
the following vehicle (2) being able to be guided along a substitute trajectory by a following vehicle driver and the substitute trajectory being able to be captured by means of the following vehicle sensors (21),
the reference trajectory data being able to be newly produced on the basis of the captured substitute trajectory, and
the reference environmental data being able to be newly produced on the basis of the following vehicle environmental data (203).

14. System according to Claim 12 or 13,
**characterized in that**
the reference trajectory data and/or the reference environmental data can also be produced on the basis of the desired trajectory (204) and/or the following vehicle environmental data (203).

15. System according to one of Claims 12 to 14,
**characterized in that**
the scout trajectory, the scout environmental data (202), the desired trajectory (204), the following vehicle environmental data (203) and/or the substitute trajectory can be transmitted to an external server (3),
the reference trajectory data and/or the reference environmental data being able to be produced by the external server (3) and
being able to be transmitted from the external server (3) to the following vehicle (2).

## Revendications

1. Procédé de commande automatique d'au moins un véhicule suiveur (2), avec lequel
une trajectoire d'éclaireur est générée pour un véhicule éclaireur (1),
le véhicule éclaireur (1) est guidé le long d'une trajectoire réelle (201), la trajectoire réelle (201) du véhicule éclaireur (1) et des données d'environnement d'éclaireur (202) étant acquises au moyen de capteurs d'éclaireur (11),
une trajectoire de consigne (204) est générée pour le véhicule suiveur (2) et des données d'environnement de véhicule suiveur (203) sont acquises au moyen de capteurs de véhicule suiveur (21),
une similarité de trajectoires d'éclaireur est déterminée à l'aide de la trajectoire d'éclaireur générée et de la trajectoire réelle (201) acquise, la trajectoire d'éclaireur générée devant être similaire à la trajectoire réelle (201) pour être évaluée comme pouvant être parcourue automatiquement, des données de trajectoire de référence sont générées et des données d'environnement de référence sont générées à l'aide des données d'environnement d'éclaireur (202),
les données de trajectoire de référence et les données d'environnement de référence sont transmises au véhicule suiveur (2),
une similarité des trajectoires est déterminée par une comparaison des trajectoires à l'aide de la trajectoire de consigne (204) générée et des données de trajectoire de référence transmises, la présence et l'intensité d'une différence entre la trajectoire de consigne (204) et la trajectoire d'éclairage (201) étant quantifiées,
une similarité des données d'environnement est déterminée par une comparaison des données d'environnement à l'aide des données d'environnement de véhicule suiveur (203) acquises et des données d'environnement de référence transmises,
lorsque la similarité des trajectoires et/ou la similarité des données d'environnement dépasse une valeur de seuil déterminée, une commande automatique du véhicule suiveur (2) étant activée et
lorsque la similarité des trajectoires et/ou la similarité des données d'environnement ne dépasse une valeur de seuil déterminée, un mode de conduite sécurisé du véhicule suiveur (2) étant activé.

2. Procédé selon l'une des revendications précédentes,
**caractérisé en ce que**
une commande manuelle du véhicule suiveur (2) est activée lors du mode de conduite sécurisé du véhicule suiveur (2),
le véhicule suiveur (2) étant guidé le long d'une trajectoire de substitution par un conducteur de véhicule suiveur et la trajectoire de substitution étant acquise au moyen des capteurs de véhicule suiveur (21),
les données de trajectoire de référence étant nouvellement générées à l'aide de la trajectoire de substitution acquise et
les données d'environnement de référence étant nouvellement générées à l'aide des données d'environnement de véhicule suiveur.

3. Procédé selon l'une des revendications précédentes,
**caractérisé en ce que** le véhicule éclaireur (1) est commandé manuellement par un conducteur éclaireur le long de la trajectoire réelle (201).

4. Procédé selon l'une des revendications précédentes,
**caractérisé en ce que** les données de trajectoire de référence et/ou les données d'environnement de référence sont en outre générées à l'aide de la trajectoire de consigne (204) et/ou des données d'environnement de véhicule suiveur (203).

5. Procédé selon l'une des revendications précédentes,
**caractérisé en ce que** la trajectoire d'éclaireur, les données d'environnement d'éclaireur (202), la trajectoire de consigne (204), les données d'environnement de véhicule suiveur (203) et/ou la trajectoire de substitution sont transmises à un serveur externe (3).

6. Procédé selon la revendication 5, **caractérisé en ce que** les données de trajectoire de référence et/ou les données d'environnement de référence sont générées par le serveur externe (3) et sont transmises par le serveur externe (3) au véhicule suiveur (2).

7. Procédé selon la revendication 6, **caractérisé en ce que** les données de trajectoire de référence et/ou les données d'environnement de référence sont en outre générées à l'aide de données supplémentaires.

8. Procédé selon l'une des revendications précédentes,
**caractérisé en ce qu'**un conducteur de véhicule suiveur active le mode de conduite sécurisé du véhicule suiveur (2) .

9. Procédé selon l'une des revendications précédentes,
**caractérisé en ce que** des données d'image sont acquises par les capteurs d'éclaireur (11) et les capteurs de véhicule suiveur (21).

10. Procédé selon la revendication 9, **caractérisé en ce que** la trajectoire d'éclaireur et/ou la trajectoire de consigne est générée à l'aide d'un système de traitement d'image, une qualité de trajectoire étant en outre déterminée par le système de traitement d'image.

11. Procédé selon l'une des revendications précédentes,
**caractérisé en ce qu'**un signal de demande est reçu par le véhicule suiveur (2) et un mode de conduite en tant que véhicule éclaireur (1) est activé pour le véhicule suiveur (2) à l'aide du signal de demande.

12. Procédé de commande automatique d'au moins un véhicule suiveur (2) avec un véhicule éclaireur (1),
le véhicule éclaireur (1) comprenant :
- un planificateur de conduite d'éclaireur (12) par lequel une trajectoire d'éclaireur peut être générée pour un véhicule éclaireur (1),
- un dispositif de commande d'éclaireur (13) par lequel le véhicule éclaireur (1) peut être guidé le long d'une trajectoire réelle (201), et
- des capteurs d'éclaireur (11) par lesquels la trajectoire réelle (201) du véhicule éclaireur (1) et des données d'environnement d'éclaireur (202) peuvent être acquises ;
le véhicule suiveur (2) comprenant :
- un planificateur de véhicule suiveur (22) par lequel une trajectoire de consigne (204) peut être générée pour le véhicule suiveur (2),
- des capteurs de véhicule suiveur (21) par lesquels peuvent être acquises des données d'environnement de véhicule suiveur (203), et
- un dispositif de commande de véhicule suiveur (23) par lequel le véhicule suiveur (2) peut être guidé le long de la trajectoire de consigne (204) ;
- des données de trajectoire de référence pouvant être générées par une unité de calcul à l'aide de la trajectoire réelle (201) du véhicule éclaireur (1) et des données d'environnement de référence pouvant être générées à l'aide des données d'environnement d'éclaireur (202),
- les données de trajectoire de référence et les données d'environnement de référence pouvant être transmises au véhicule suiveur (2),
- une similarité des trajectoires pouvant être déterminée au moyen d'une unité de comparaison par une comparaison des trajectoires à l'aide de la trajectoire de consigne (204) générée et des données de trajectoire de référence transmises, la présence et l'intensité d'une différence entre la trajectoire de consigne (204) et la trajectoire d'éclairage (201) pouvant être quantifiées,
- une similarité d'environnement pouvant être déterminée au moyen de l'unité de comparaison par une comparaison des données d'environnement à l'aide des données d'environnement de véhicule suiveur (203) acquises et des données d'environnement de référence transmises, et
- lorsque la similarité des trajectoires et/ou la similarité des données d'environnement ne dépasse pas une valeur de seuil déterminée, un mode de conduite sécurisé du véhicule suiveur (2) étant activé par le dispositif de commande de véhicule suiveur (23),
- la trajectoire d'éclaireur devant être suffisamment similaire à la trajectoire réelle (201) pour être évaluée comme pouvant être parcourue automatiquement.

13. Système selon la revendication 12,
**caractérisé en ce que**
une commande manuelle du véhicule suiveur (2) peut être activée lors du mode de conduite sécurisé du véhicule suiveur (2),
le véhicule suiveur (2) pouvant être guidé le long d'une trajectoire de substitution par un conducteur de véhicule suiveur et la trajectoire de substitution pouvant être acquise au moyen des capteurs de véhicule suiveur (21), les données de trajectoire de référence pouvant être nouvellement générées à l'aide de la trajectoire de substitution acquise et
les données d'environnement de référence pouvant être nouvellement générées à l'aide des données d'environnement de véhicule suiveur (203).

14. Système selon la revendication 12 ou 13,
**caractérisé en ce que**
les données de trajectoire de référence et/ou les données d'environnement de référence peuvent en outre être générées à l'aide de la trajectoire de consigne (204) et/ou des données d'environnement de véhicule suiveur (203) .

15. Système selon l'une des revendications 12 à 14,
**caractérisé en ce que**
la trajectoire d'éclaireur, les données d'environnement d'éclaireur (202), la trajectoire de consigne (204), les données d'environnement de véhicule suiveur (203) et/ou la trajectoire de substitution peuvent être transmises à un serveur externe (3),
les données de trajectoire de référence et/ou les données d'environnement de référence pouvant être générées par le serveur externe (3) et pouvant être transmises par le serveur externe (3) au véhicule suiveur (2).
